**Europäisches Patentamt**

**European Patent Office**

**Office européen des brevets**

(19)

(11) Publication number: **0 055 810**
**A2**

(12) # EUROPEAN PATENT APPLICATION

(21) Application number: **81108901.0**

(22) Date of filing: **26.10.81**

(51) Int. Cl.³: **G 01 N 27/22**

(30) Priority: **05.01.81 US 222574**

(43) Date of publication of application:
**14.07.82 Bulletin 82/28**

(84) Designated Contracting States:
**DE FR GB**

(71) Applicant: **Société Francaise des Techniques Lummus
Tour Franklin Cedex No.11
F-92081 Paris La Defense 8(FR)**

(72) Inventor: **Odom, Roger K.
105 Secluded Avenue
Redwood City California(US)**

(54) A dielectric moisture monitor.

(57) The moisture content of a dielectric medium is measured through the use of a capacitive probe. A first sinusoidal voltage is impressed across the material and the resulting probe current is synchronously detected under the control of a sinusoidal voltage which is in phase quadrature with the impressed voltage. Accordingly, the probe current which flows between successive zero-crossings of the quadrature voltage is integrated to provide a measure of the reactive component of the probe current which, in turn, is commensurate with moisture content.

./...

EP 0 055 810 A2

Fig.3

-1-

# DIELECTRIC MOISTURE MONITOR

## Background of the Invention

(1) Field of the Invention

The present invention relates to measuring a parameter of a dielectric material and particularly to determining the permittivity of a medium which is capable of fluid flow and which, because of its moisture content, has some degree of conductivity. More specifically, this invention is directed to a moisture monitor which accurately measures the dielectric constant of a conductive dielectric medium through the use of a capacitive probe. Accordingly, the general objects of the present invention are to provide novel and improved methods and apparatus of such character.

(2) Description of the Prior Art

Devices which purport to provide a meaningful measure of the moisture content of a "fluid" medium are known in the art. For the most part, these prior art measuring devices employ a capacitive probe which is inserted in the medium under test. The measurement technique consists of sensing the current through or the voltage across the probe and utilizing the sensed current or voltage as a measure of moisture content. These prior art moisture measuring systems are, principally for the reasons to be discussed below, notoriously inaccurate.

The dielectric constant or permittivity of most fluids is, when compared to that of water, quite low. It has been shown, by Debye's relation, that knowledge of the net permittivity of a mixture containing water will permit the determination of the percentage of moisture content. Accordingly, as noted above, numerous attempts have been made in the prior art to determine moisture content by means of measuring permittivity with a capacitive probe; this being a particularly attractive approach because permittivity will vary over a wide range with changes in the amount of water present.

As also noted above, prior art moisture monitors which utilize capacitive probes are notoriously inaccurate. A principal reason for this inaccuracy is the failure to take into account the complex nature of the measured parameter; i.e., probe voltage or current; in the presence of a conductive dielectric medium. When the dielectric medium of interest is conductive, and most "fluids" exhibit some degree of conductivity, the equivalent circuit of the capacitive probe may be represented by a resistance in parallel with a capacitor. While the probe may be excited with either a constant current or a constant voltage, for purposes of explanation it will be presumed that the more common constant voltage drive is employed. When an ac voltage is applied to a pure resistance the current flow is, of course, in phase with the applied voltage whereas the current will lead the applied voltage by precisely 90° when the same voltage is applied to a pure capacitance. The reactive current; i.e., the current which flows because of the capacitive reactance of the probe; is proportional to the net permittivity of the fluid material in the probe and thus is proportional to the moisture content of this dielectric material. The resistive current is a measure of the conductivity of the material. However, the net current flow through a capacitive probe inserted in a conductive dielectric is a phasor whose magnitude is the phasor or geometric sum of the two separate phase-displaced currents. Accordingly, the magnitude of the actual current through the probe, which is the measured parameter, is greater than its reactive current component and therefore is not an accurate indicator of the moisture content of the medium within the probe.

The prior art has not encompassed a reliable and accurate technique for demodulating the current through a capacitive probe to thereby separate such current into its reactive and resistive components. Prior art moisture detectors which have recognized the problem described above are exemplified by the disclosures of Patents 3,746,975 and 3,778,705.

## Summary of the Invention

The present invention overcomes the above-briefly discussed and other deficiencies and disadvantages of the prior art by providing a novel and improved technique for demodulating the current flowing through a capacitive probe inserted in a conductive dielectric medium and excited by an ac voltage. The present invention also encompasses a unique moisture detector which functions in accordance with the aforesaid novel technique.

In accordance with the present invention, a pair of ac signals which are displaced in phase by precisely 90° are generated. A first of these signals is applied to the capacitive probe while the second signal is employed to control application of the probe phasor, produced as a result of application of the first signal to the probe, to an integrator. The result of the integration will thus be a voltage, proportional to the net area under the probe phasor between successive zero crossings of the second signal, which bears a quadrature relationship to the probe drive signal. This voltage will be directly proportional to the reactive current component of the probe phasor and thus will be proportional to moisture content.

Apparatus in accordance with a preferred embodiment of the present invention comprises a quadrature oscillator which simultaneously generates a sine-wave and cosine-wave; i.e., two signals which are identical and differ in phase by precisely $90^{\circ}$. In the preferred embodiment the cosine voltage is employed as the drive signal for the test probe. The sine voltage is processed in a zero-crossing detector to produce a square-wave which is in-phase with the sine voltage. The current induced in the capacitive probe by the cosine-wave is, after amplification, sampled by a switch driven by the square-wave which is in-phase with sine voltage. In the preferred embodiment, the probe phasor is also inverted whereby the probe phasor is sampled on alternate half-cycles. The thus sampled probe phasor is applied to an integrator which, in combination with the switch, forms a phase-sensitive or synchronous detector. The output of the integrator is, as described above, a d.c. voltage proportional to the net permittivity of the material within the probe.

## Brief Description of the Drawing

The present invention may be better understood and its numerous objects and advantages will become apparent to those skilled in the art by reference to the accompanying drawing in which:

FIGURES 1A, 1B and 1C constitute phasor diagrams which will facilitate understanding of the invention;

FIGURE 2 is a waveform diagram depicting voltages generated in the circuit of the present invention; and

FIGURE 3 is a functional block diagram of apparatus in accordance with a preferred embodiment of the invention.

## Description of the Preferred Embodiment

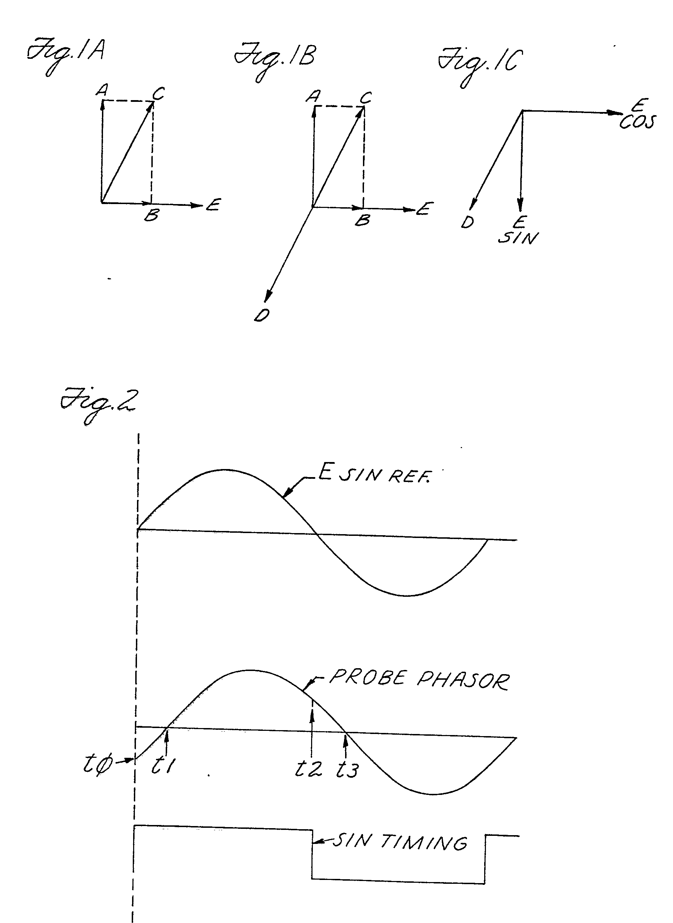

With reference to the drawing, FIGURE 1A comprises a phasor diagram wherein the voltage applied to a capacitive probe inserted in a dielectric medium is indicated by E, the reactive current phasor is indicated by A, the conductive current phasor is indicated by B and C represents the geometric sum of the conductive and reactive current components. As discussed above, phasor C will be the actual current through the probe and, bearing in mind that the reactive current A, which leads the applied voltage E by $90^\circ$, is commensurate with moisture content, it may be seen that the actual current through the probe is not a true measure of moisture content of the medium within the probe.

Referring now to FIGURE 1B, the phasor D is directly proportional to the probe current phasor C and its absolute value is determined by circuiting constraints plus the full scale range of the moisture monitor in terms of percent moisture content. For purposes of explanation, it will be presumed that phasor C has a value of 1 or unity and that the angle between phasors C and B is $60^\circ$. Under these conditions, as is well known in the art, the magnitude of phasor A will be 0.866. Thus, in the example situation being described, use of the magnitude of the probe current C as a measure of moisture content would result in an error of 15.5%; i.e., $[(1/0.886) - 1)]$. Accordingly, in order to determine the magnitude of phasor A, it is necessary to accurately demodulate phasor C (or phasor D).

In order to achieve the requisite demodulation, in accordance with the present invention, it is first necessary to generate a pair of high-purity sine-waves which are in quadrature. It is customary to call the leading phase of these two quadrature signals the cosine-wave and in phasor diagrams such as as FIGURES 1A-1C, these waveforms may be considered to be rotating counter-clockwise with the $0^O$ reference to the right (phasors B and E). If the cosine-waveform source is used to drive the probe, this signal becomes the phasor E of FIGURES 1A and 1B. In FIGURE 1C, this drive signal is indicated as "E cos". FIGURE 1C also indicates the probe phasor D and the lagging sine-wave source as "E sin". Having defined the angle between phasors C and B of FIGURE 1B as $60^O$, the angle between phasors A and C must obviously be $30^O$. Similarly, the angle between phasors D and "E sin" of FIGURE 1C must be $30^O$. In actual practice, of course, the angles may vary considerably from the $60^O$ and $30^O$ being employed for purposes of explanation.

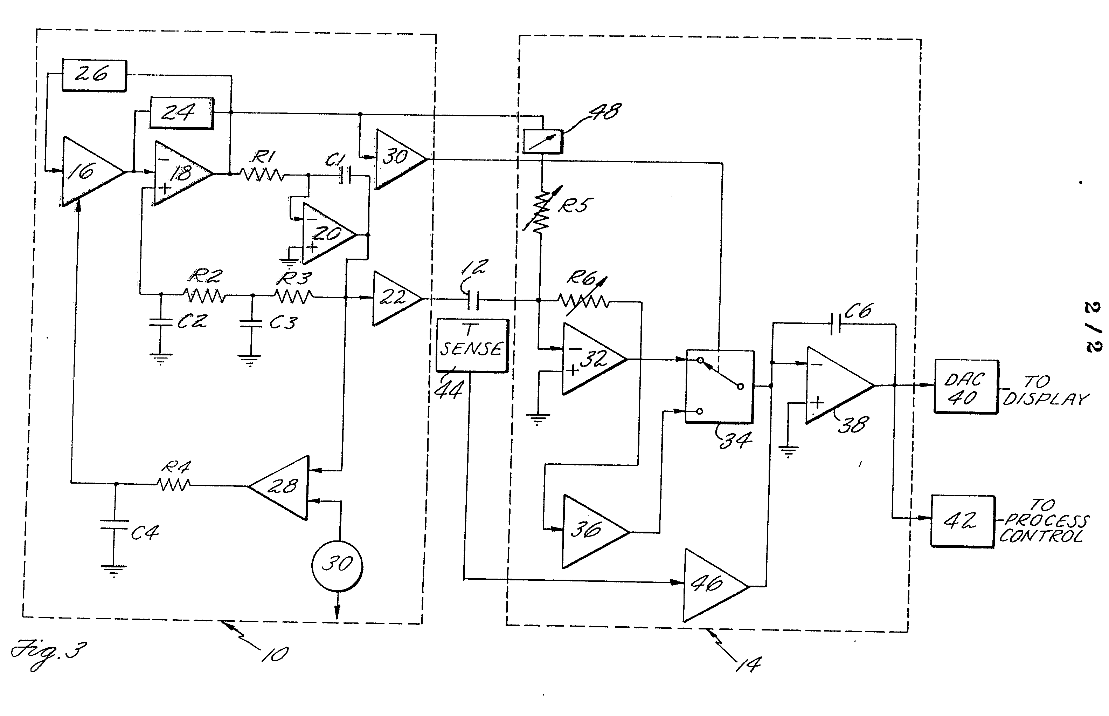

FIGURE 2 represents graphically the relationship between the sine-wave signal, "E sin", and probe phasor D. FIGURE 2 also depicts a timing signal, specifically a square-wave, which is derived from and is in phase with the "E sin" reference signal. As described above with respect to FIGURES 1B and 1C, FIGURE 2 represents the probe phasor lagging the reference signal by $30^O$.

In accordance with the present invention, and as will be more fully described below in the discussion of FIGURE 3, the in-phase timing square-wave is utilized to control the closing of a switch through which the probe phasor is applied to the input of an integrator; the switch alternately being opened and closed at the zero crossings of the reference sine-wave. Thus, in accordance with a preferred embodiment of the invention, the probe phasor D is applied to the input of an integrator at time t O and the probe phasor is isolated from the input to the integrator at time $t_2$. During the timing period from t O to $t_1$, the integrator will store a voltage proportional to the area under the first $30^\circ$ of the probe phasor. For the next $30^\circ$, the integrator will lose the stored voltage from the first $30^\circ$ since the two areas under the probe phasor waveform are equal but of opposite polarity. Finally, integration will continue until time $t_2$ where the sine timing waveform changes state and integration ceases. If the output of the integrator; i.e., the net area of a full half-cycle of the "E sin" reference voltage; is normalized to 1 or unity, and continuing with the example discussed above where the phasor D lags the reference voltage by $30^\circ$, the algebraic sum of the areas sampled in FIGURE 2 will result in a value of 0.866. Thus, the technique of the present invention, especially as implemented in the manner to be described below, effects demodulation of the probe phasor to provide an output signal which corresponds in average magnitude with the magnitude of the probe phasor current. The foregoing is true for any probe phasor lag angle between $0^\circ$ and $90^\circ$.

To continue with the above discussion, if the probe phasor is advanced by $30^\circ$ so as to be coincident with the "E sin" reference, the full half-cycle of the phasor will be integrated. Under these conditions it might be expected that the integral will rise, in the example being considered, from 0.866 to 1.000. However, referring again to FIGURES 1B and 1C, it may be seen that this $30^\circ$ advance will eliminate the conductive current component B, make the probe phasor C coincident with the reactive current component A at 0.866 and reduce the magnitude of the phasor D accordingly. Thus, the parameter which is commensurate with moisture content has remained unchanged while the component of the probe current attributable to the conductivity of the medium within the probe has been eliminated.

The mathematical relationship for the above-discussed form of phase-sensitive detection is as follows:

$$1/2 [\cos (90^{\circ} - O ) + 1] -1/2 [\cos (90^{\circ} + O ) +1] = \sin Q$$

As will also be described below in the description of the preferred embodiment, the sensitivity of a moisture monitor which is operated in accordance with the technique of the present invention may be enhanced by integrating the phasor current during each half-cycle of the "E sin" reference rather than sampling alternate half-cycles as represented in FIGURE 2. The sampling of each half-cycle of the phasor current has the additional advantage of cancelling even harmonic distortion.

Referring now to FIGURE 3, a preferred embodiment of the present invention is depicted in the form of a functional block diagram. The apparatus shown in the drawing comprises a quadrature oscillator, indicated generally at 10, the sampling probe 12 and a phase sensitive synchronous detector which has been indicated generally at 14. The detector 14, as will be described below, performs the above-discussed integration of the probe current.

The quadrature oscillator 10 comprises a device which generates a pure sine-wave plus a simultaneous cosine-wave. The cosine-wave is, as implicit in its title, a pure sine-wave that leads the other sine-wave by precisely $90^{\circ}$. Quadrature oscillator 10 comprises an operational amplifier 16 which provides an output signal to the negative input terminal of a series connected amplifier 18. The output of amplifier 18 comprises the reference sine-wave voltage indicated in FIGURE 2 as "E sin". The current supplied by amplifier 18 will pass through a series connected resistor R1 and capacitor C1. The voltage across capacitor C1 will, of course, lag the current through the capacitor by $90^{\circ}$. Capacitor C1 will preferably be a high quality polystyrene device which is characterized by a high degree of temperature stability. The oscillator 10 will also typically include calibrating means, potentiometers for example, to permit the balancing out of any phase errors. These calibrating means are well known in the art and will not be described herein. Capacitor C1 is connected in parallel with a further amplifier 20 which is operated as an inverter. Accordingly, the output voltage of inverter 20 will lead the "E sin" voltage which appears at the output of amplifier 18 by $90^{\circ}$. The voltage appearing at the output of inverter 20, which is the "E cos" signal represented by phasors B of FIGURES 1A and 1B, is buffered in an amplifier 22 and subsequently applied as the drive signal for probe 12. The "E cos" signal from inverter 20 is also passed through a two-stage integrator defined by resistor R3 and capacitor C3 and resistor R2 and capacitor C2. The output signal of this two-stage integrator lags the output signal of inverter 20 by $90^{\circ}$ and thus is in phase with the "E sin" output signal of amplifier 18. The integrated inverter output signal is fed back to the positive input of amplifier 18, in phase with the output signal of amplifier 18, thereby fulfilling the Barkausen criteria for oscillation. The necessary gain required of amplifier 18 to make up for the loss due to integration is controlled in two ways. First, part of the required negative feedback is supplied by a passive feedback network 24. The remainder of the requisite negative feedback is supplied via another passive feedback network 26 which delivers the output of amplifier 18 as the input to amplifier 16. The operational amplifier 16 is operated in the transconductance mode with its gain under control of the current supplied by a further amplifier 28 via an integrator defined by resistor R4 and capacitor C4. Amplifier 28 functions as a comparator wherein the peak valve of the "E cos" signal supplied by invertor 20 is compared with a precision voltage reference supplied by a source 30. Thus, amplifier 28 functions as an error-detector for generating an output signal which, after integration, controls the gain of operational amplifier 16 and thus the amplitude of the two phase releated signals provided by quadrature oscillator 10. The net effect of the gain control comprising comparator 28 and feedback networks 24 and 26 is to insure that the oscillator circuit comprising amplifier 18 has a gain of unity with zero phase shift.

The "E sin" waveform appearing at the output of amplifier 18 is also delivered as the input signal to a further comparator 30. Comparator 30 may be any one of several known devices which, in response to an applied sine-wave signal, will generate a square-wave output signal which is in phase with the applied input. Thus, by way of example only, comparator 30 may comprise a bistable circuit which is responsive to the zero-crossings of the applied sine-wave. The zero-crossing detector is selected to have a fast response relative to the reference frequency which may, for example, be 10kHg. A suitable device is the standard LM339 integrated circuit or an RCA type CA3290 detector. The positive and negative transitions of the square-wave signal provided at the output of comparator 30 are coincident with the positive and negative zero-crossings of the "E sin" reference signal. Accordingly, oscillator 10 comprises a source of three signals; namely a pair of sine-waves in quadrature plus a sine-reference square-wave gating signal.

As noted above, the "E cos" voltage which appears at the output of buffer amplifier 22 is applied to probe 12 which is represented in FIGURE 3 as a capacitor. The application of this voltage to probe 12 induces a current which is proportional to the net permittivity or dielectric constant ($e_r$) of the medium within the probe. If the medium within the probe were a perfect insulator, the induced current would lead the applied "E cos" voltage by precisely $90^{\circ}$. Amplification of this hypothetical signal in an amplifier 32, bearing in mind that the amplifier will invert the applied voltage, would produce an output voltage which was in-phase with "E sin" reference. The amplitude of this signal would be a function of the dielectric constant of the medium within probe 12. The medium within probe 12, of course, will not be a perfect insulator and thus the signal commensurate with the probe current must be processed in the manner to be described below.

When the medium being sampled is completely free of water the probe current will be at some finite minimum. However, at this time the output of amplifier 32 should be at zero if the signal to be demodulated is to be an accurate measure of moisture content. In accordance with the dislosed embodiment of the present invention, the probe minimum current is balanced by also applying, to the input of amplifier 32, an opposing "E sin" current via potentiometer R5. Thus, in operation, the circuit is initially calibrated by adjusting potentiometer R5 to minimize the probe current so that the net current through a feedback potentiometer R6, connected in parallel with amplifier 32, is zero with a dry sample. Resistor R6 is employed to set the gain of amplifier 32 and, thereby, the full-scale span of the instrument. This gain setting is required to compensate for manufacturing tolerances of the probe 12.

It is to be noted that most "fluids" are conductive to some degree and thus the probe current, with a dry sample, will not be precisely in phase opposition to the "E sin" current furnished via potentiometer R5. Accordingly, employing only potentiometer R5, the current through potentiometer R6 can be minimized but not zeroed. Accordingly, a moisture monitor in accordance with the present invention may further include phase adjustment means 48 so that the current through R5 can be adjusted to be exactly equal in magnitude and opposite in phase to the probe "dry current", thereby allowing cancellation of the probe current and resulting in zero current through R6. The phase adjustment means 48 may comprise an adjustable RC circuit. It is also to be observed that the accuracy of the moisture monitor of the present invention is not effected by subsequent changes in the conductivity of the material within the probe, such as may be attributed to variations in water content or temperature, since the instrument is insensitive to changes in conductivity once it has been calibrated.

The output of inverter/amplifier 32 is sampled by means of an analog switch, indicated schematically at 34, which is operated by the square-wave gating signal which appears at the output of comparator 30. The output of amplifier/inverter 32 is again inverted, in amplifier/inverter 36, and applied to a second input of switch 34 whereby alternate half-cycles of the voltage commensurate with the current induced in probe 12 may be sampled. The switch 34 may, for example, comprise a pair of field-effect transistors or an integrated circuit such as a type CD4053 analog switch (multiplexer) available from RCA.

The signals passed by switch 34 are applied to the input of an integrator comprising amplifier 38 and a capacitor C6 which is connected in parallel therewith. Since amplifier 38 is operated as an integrator, the output thereof will be a d.c. voltage proportional to the net $e_r$ of the probe 12 with the material being sampled therein. From the foregoing description, it may be seen that amplifiers 32 and 36, in cooperation with switch 34, function as a full-wave rectifier while integrator 38 functions as a filter; the entire circuit thus comprising a phase-sensitive or synchronous detector. Due to the synchronous drive of switch 34 by the square-wave gating signal which is in-phase with the "E sin" reference, the output of integrator 38 is a function of both the amplitude and relative phase of the imaginary term; i.e., the reactive component; of the probe current.

The d.c. voltage level appearing the output of integrator 38 may be applied as the input to a digital-to-analog convertor 40 which will provide a coded output signal to a digital readout. Alternatively, the integrated signal commensurate with the current induced in probe 12 may be read directly by an analog meter. The output of integrator 38 may also be utilized by a control circuit 42 to provide output signals for process control.

If deemed necessary or desirable, a moisture monitor in accordance with the present invention may also comprise a temperature compensation circuit including a temperature probe 44 which provides an input signal to a further amplifier 46. The output of amplifier 46, in the manner known in the art, will be a signal of the proper polarity which shifts the input to integrator 38 in the proper direction to compensate for temperature induced errors; superimposition of the temperature compensation signal on the input to integrator 38 causing the integrator output to vary in the proper direction.

It is especially to be noted that, for any given probe capacity, the change in probe current vrs. change in moisture is a constant and is independant of the setting of potentiometer R5. Accordingly, as an alternative calibration technique, the value of R5 may be fixed and "dry" calibration accomplished by varying the capacitance across the probe by, for example, using electronic switching to connect fixed value capacitors across the probe to thereby provide base calibration for plural values of base permittivity. A variable capacitor could obviously be employed for this purpose.

It should be obvious to those skilled in the art that the present invention may also be employed to measure conductivity either simultaneously with permittivity or in lieu thereof.

While a preferred embodiment has been shown and described, various modifications and substitutions may be made thereto without departing from the spirit and scope of the invention. Accordingly, it is to be understood that the present invention has been described be way of illustration and not limitation.

What is claimed is:

CLAIM 1.  Apparatus for measuring a parameter of a dielectric material capable of fluid flow comprising:

a probe for insertion into the material, said probe having at least a pair of spatially displaced electrodes;

means for generating a pair of phase-related alternating voltages, the first of said voltages leading the second of said voltages by 90°;

means applying one of said alternating voltages to a first of said probe electrodes whereby an alternating probe current which is out of phase with the applied voltages will be induced when a dielectric material is present between the electrodes;

means for generating a voltage commensurate with the probe current, said voltage being the sum of phase related reactive and resistive components; and

means for demodulating the voltage commensurate with probe current whereby a signal commensurate with a first component thereof will be produced, said first component being a measure of the parameter of the material, said demodulating means being responsive to the other of said phase related voltages.

CLAIM 2.  The apparatus of claim 1 wherein said demodulating means comprises:

a detector responsive to the said other of said phase-related voltages for sampling the voltage commensurate with probe current in synchronism with the said other voltage.

CLAIM 3. The apparatus of claim 2 wherein said detector comprises:

switch means responsive to the said other of said phase-related voltages; and

integrator means, said integrator means being alternately coupled to and isolated from said means for generating a voltage commensurate with probe current by said switch means.

CLAIM 4. The apparatus of claim 2 wherein the said parameter is dielectric constant and the first component of said voltage commensurate with probe current is the reactive component and said detector comprises:

switch means responsive to the said other of said phase-related voltages; and

integrator means, said integrator means being coupled to said means for generating a voltage commensurate with probe current in synchronism with said other of said phase-related voltages by said switch means.

CLAIM 5. The apparatus of claim 4 wherein said means for generating a pair of phase-related voltages includes:

means for generating switch control pulses which are synchronized with the zero-crossings of the said other of said phase-related voltages.

-17- 0055810

CLAIM 6. The apparatus of claim 3 wherein said means for generating a pair of phase-related voltages includes:

means for generating switch control pulses which are synchronized with the zero-crossings of the said other of said phase-related voltages.

CLAIM 7. The apparatus of claim 5 further comprising: means for calibrating said apparatus whereby there will be no probe current when the dielectric material does not contain free water, said calibrating means comprising means responsive to said other of said phase-related voltages for generating a compensating signal and for applying said compensating signal to said demodulating means.

CLAIM 8. The apparatus of claim 6 further comprising: means for calibrating said apparatus whereby there will be no probe current when the dielectric material does not contain free water, said calibrating means comprising means responsive to said other of said phase-related voltages for generating a compensating signal and for applying said compensating signal to said demodulating means.

CLAIM 9. The apparatus of claim 7 wherein said switch means comprises a pair of input terminals and an output terminal and wherein said means for generating a voltage commensurate with probe current comprises:

first amplifier means;

means for applying said probe current and said compensating signal to the input of said first amplifier means, the output of said first amplifier means being connected to a first input terminal of said switch means;

inverter means, said inverter means having an input terminal connected to said first amplifier means output, the output of said inverter means being connected to a second input terminal of said switch means, the output terminal of said switch means being connected to said integrator means, whereby said integrator means will sample said voltage commensurate with probe current during each half cycle of said other of said phase-related voltages.

CLAIM 10. The apparatus of claim 8 wherein said switch means comprises a pair of input terminals and an output terminal and wherein said means for generating a voltage commensurate with probe current comprises:

first amplifier means;

means for applying said probe current and said compensating signal to the input of said first amplifier means, the output of said first amplifier means being connected to a first input terminal of said switch means;

inverter means, said inverter means having an input terminal connected to said first amplifier means output, the output of said inverter means being connected to a second input terminal of said switch means, the output terminal of said switch means being connected to said integrator means, whereby said integrator means will sample said voltage commensurate with probe current during each half cycle of said other of said phase-related voltages.

CLAIM 11.   A method of measuring a parameter of a dielectric material comprising the steps of:

inserting the material between a pair of spaced electrodes;

establishing an alternating potential across the material disposed between the electrodes;

generating an alternating voltage which is precisely in phase quadrature with the potential established across the material;

sensing the current flow induced by the establishment of the alternating potential across the electrodes; and

measuring the induced current flow during at least a half cycle of the generated quadrature voltage, the measured current being a function of the parameter of interest.

CLAIM 12.   The method of claim 11 wherein the step of measuring comprises:

integrating the current flow.

CLAIM 13.   The method of claim 11 wherein the parameter to be measured is moisture content and wherein the step of measuring the induced current comprises:

the current in synchronism with the quadrature voltage to integrate the total current flow.

CLAIM 14.   The method of claim 13 wherein the step of demodulating includes:

sampling the induced current between successive zero-crossing of the quadrature voltage.

Fig.1A

Fig.1B

Fig.1C

Fig.2

E SIN REF.

PROBE PHASOR

tø   t1        t2  t3

SIN TIMING

Fig.3